# FASCICULE DE BREVET EUROPEEN

(11) **EP 2 841 340 B1**
(45) Date de publication et mention de la délivrance du brevet: **13.04.2016**
(21) Numéro de dépôt: 13723887.9
(22) Date de dépôt: 26.04.2013
(51) Int. Cl.: B64D 29/06, F02K 1/72, B64D 33/04

(54) **NACELLE DE TURBORÉACTEUR À SECTION AVAL**
TURBINEN-TRIEBWERKSGONDEL MIT EINEM AUSLAUFBEREICH
TURBOFAN ENGINE NACELLE WITH DOWNSTREAM SECTION

(30) Priorité: 27.04.2012 FR 1253902
(43) Date de publication de la demande: 04.03.2015
(73) Titulaire: Aircelle, 76700 Gonfreville L'Orcher (FR)
(72) Inventeur: KIOUA, Hazem, F-76280 Saint Jouin Bruneval (FR); PEYRON, Vincent, F-76620 Le Havre (FR); VALLEROY, Laurent Georges, F-76600 Le Havre (FR)
(74) Mandataire: Gaillarde, Frédéric F. Ch.
(86) Numéro de dépôt international: PCT/FR2013/050938
(87) Numéro de publication internationale: WO 2013/160627

(56) Documents cités:
- FR-A1- 2 560 854
- US-A1- 2011 023 450
- US-A1- 2011 318 173

## Description

La présente invention se rapporte à un dispositif de liaison entre un cadre avant d'inverseur de poussée d'une nacelle de turboréacteur et un pylône ou mât d'accrochage dudit turboréacteur.

Comme cela est connu en soi, un ensemble propulsif d'aéronef comprend classiquement un turboréacteur logé à l'intérieur d'une nacelle.

La nacelle présente généralement une structure tubulaire comprenant une entrée d'air en amont du turboréacteur, une section médiane destinée à entourer une soufflante du turboréacteur et son carter, une section aval destinée à entourer la chambre de combustion du turboréacteur et abritant le cas échéant des moyens d'inversion de poussée. Elle peut être terminée par une tuyère d'éjection dont la sortie est située en aval du turboréacteur.

L'ensemble est rattaché à une structure fixe de l'aéronef, notamment sous une aile ou à un fuselage, par l'intermédiaire d'un pylône ou mât d'accrochage du turboréacteur rattaché à ce dernier dans sa partie avant et arrière par des suspensions et qui assure également la tenue de la nacelle.

Il existe de nombreux systèmes de liaison entre le turboréacteur et le pylône de manière à reprendre au mieux les efforts de poussée dudit turboréacteur. On peut notamment citer les documents FR 2 948 636, FR 2 948 635, EP 2 221 249, FR 2 892 706, FR 2 855 494, FR 2 755 942, US 2011 0318173, US 2011 0023450 et FR 2 560 854.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur (structure interne fixe ou IFS pouvant appartenir à la nacelle) et une paroi interne d'une structure externe la section aval de la nacelle (OFS ou structure fixe externe). Les deux flux d'air sont éjectés du turboréacteur par l'arrière de la nacelle.

Comme évoqué précédemment, la structure fixe externe peut abriter un dispositif d'inversion de poussée.

Le rôle d'un inverseur de poussée est lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage et assurent la continuité aérodynamique interne et externe de la nacelle.

Ces capots peuvent remplir directement une fonction de déviation ou simplement d'activation d'autres moyens de déviation (volets internes).

Dans le cas d'un inverseur à grilles, également connu sous le nom d'inverseur à cascades, la réorientation du flux d'air est effectuée par des grilles de déviation, le capot n'ayant qu'une simple fonction de coulissage visant à découvrir ou recouvrir ces grilles. Des portes de blocage complémentaires, également appelées volets de blocage, activées par le coulissement du capotage, permettent une obstruction au moins partielle de la veine en aval des grilles de manière à optimiser la réorientation du flux froid.

Afin de supporter les capots mobiles d'inversion et de lier la section aval au reste de la nacelle, et notamment à la section médiane par l'intermédiaire du carter de soufflante, celle-ci comprend des éléments fixes et notamment des poutres longitudinales liées en amont à un ensemble sensiblement annulaire appelé cadre avant, formé en une ou plusieurs parties entre lesdites poutres longitudinales, et destiné à être fixé à la périphérie du bord aval du carter de la soufflante du moteur.

Ce cadre avant est lié au carter de soufflante par des moyens de fixation généralement du type couteau / gorge comprenant une bride sensiblement annulaire, solidaire du cadre avant et venant coopérer avec une rainure en forme de J ou de V, communément appelé J-Ring.

Les poutres longitudinales supérieures sont par ailleurs liées au pylône.

Cette structure peut également s'appliquer à une nacelle dite lisse, dans laquelle la section aval constitue un carénage externe de la nacelle et n'est pas équipée d'un dispositif d'inversion de poussée coulissant le long des poutres.

Ainsi, la section aval est rattaché, d'une part, au turboréacteur par l'intermédiaire du carter de soufflante, et d'autre part, au pylône.

Dans le cas d'une architecture de nacelle classique dite à conduit en C ou en D (C-duct ou D-duct), la section aval possède des demi-capots à ouverture latérale (à fin de maintenance) par pivotement des poutres supérieures autour d'un axe sensiblement longitudinal de la nacelle s'étendant le long du pylône de rattachement du turboréacteur.

Il existe également un autre type d'architecture de nacelle, plus récent, dite à conduit en O (O-duct) et décrit notamment dans le document FR 2916426.

Dans cette architecture O-duct, la section aval ne comprend plus deux demi-capots à ouverture latérale, mais un unique capot monobloc sensiblement périphérique, et qui s'entend d'un côté à l'autre du pylône.

A fins de maintenance, un tel capot ne peut s'ouvrir par pivotement et est monté mobile par coulissement vers l'arrière de la nacelle, le long de rails ou glissières disposées de part et d'autre du pylône.

Pour une architecture de nacelle classique en C ou en D, les liaisons nacelle / pylône ne présentent pas particulièrement de difficultés et sont bien connues. Pour la section aval, le montage pivotant des capots sur le pylône, permet notamment une bonne accommodation des déplacements relatifs et autres jeux de montage de l'ensemble.

Il n'en va pas de même pour une architecture en O dans laquelle ces moyens d'ajustement n'existent plus. Un exemple de système de liaison pour une architecture O-duct est décrit dans le document US 2011/0023450.

Les rails et glissières de coulissement de la structure aval sur le pylône sont également structuraux et doivent donc assurer la tenue de l'ensemble, la reprise des efforts et leur transmission au pylône.

Une telle architecture et liaison conduisent à plusieurs difficultés de mise en oeuvre.

Plus précisément, comme évoqué précédemment, une section aval de nacelle de type à conduit en O est attachée, d'une part, au turboréacteur par un cadre avant lié au carter de soufflante (interface dite A2), et d'autre part, au pylône par l'intermédiaire de ses rails de coulissement.

Ces rails sont orientés sensiblement à 90° par rapport à l'interface A2 de liaison au carter de soufflante.

Cette double attache engendre un assemblage hyperstatique et une difficulté majeure est d'accommoder, entre le turboréacteur et le pylône, les tolérances d'assemblage, les déplacements relatifs sous charges ainsi que les déplacements relatifs dus à l'expansion thermique du turboréacteur, entre autres.

Actuellement, ces déplacements relatifs doivent être repris par la flexibilité de la structure fixe de la section aval. Cela nécessite une adaptation des matériaux utilisés

Les solutions existantes qui adressent ce problème de liaison nacelle / pylône concernent les nacelles classique à structure en C ou en D, et ne sont pas adaptées à une nacelle à structure en O possédant une liaison directe au pylône (nacelle en O coulissant).

Ainsi, il existe un besoin pour une liaison permettant de résoudre ce problème.

Pour ce faire, la présente invention se rapporte à une nacelle de turboréacteur présentant une section aval comprenant au moins un cadre avant destiné à être rattaché à une partie fixe de la nacelle, ladite section aval étant équipée d'au moins un rail ou glissière s'étendant selon une direction sensiblement longitudinale de la nacelle et apte à coopérer avec au moins une glissière ou rail correspondant d'un pylône de rattachement du turboréacteur, caractérisée en ce que le cadre avant est relié au rail ou à la glissière de la section aval par l'intermédiaire d'au moins une bielle rotulée.

Ainsi, en prévoyant une bielle rotulée entre le cadre avant, rattaché rigidement au turboréacteur par l'intermédiaire du carter de soufflante, et système de rattachement au pylône de la section arrière, les déplacements relatifs entre le turboréacteur et le pylône ne sont plus pris en charge par déformation flexible de la structure fixe de la section aval mais par ladite liaison souple.

Selon une variante avantageuse de réalisation, la section aval comprend un cadre arrière. Un tel cadre arrière peut venir renforcer la tenue structurale de l'ensemble de la section aval et être utilisé pour supporter au moins en partie des éléments internes de la nacelle tels que des grilles de déviation dans le cas d'une section aval équipée d'un dispositif d'inversion de poussée, ou encore des moyens d'actionnement.

Avantageusement, le cadre arrière est rattaché au rail ou à la glissière par l'intermédiaire d'au moins une liaison rotulée.

De manière préférentielle, la ou les liaisons rotulées sont orientées selon un plan sensiblement perpendiculaire au pylône. Ainsi, seules les déformations selon les directions longitudinale (X) et transversale (Y) de la nacelle sont absorbées. Les efforts selon la direction du pylône (Z), correspondant généralement à des efforts de poussée sont donc bien repris et transmis au pylône.

Selon une première variante de réalisation, la bielle rotulée est principalement orientée sensiblement selon une direction longitudinale de la nacelle.

Selon une deuxième variante de réalisation, la bielle rotulée est orientée principalement selon une direction transversale de la nacelle.

Avantageusement, la liaison rotulée est une liaison double rotule.

Selon un mode de réalisation particulier, la section aval est équipée d'un dispositif d'inversion de poussée.

Avantageusement, il s'agit d'une nacelle de type dit à conduit en O. Bien que particulièrement dédiée à des nacelles de type O-duct telles que présentées précédemment, l'invention est bien évidemment applicable à des nacelles de type C-duct dans lesquelles les demi-capots sont montés coulissant le long d'une poutre supérieur ou du pylône, et le long d'une poutre inférieure.

La présente invention sera mieux comprise à la lumière de la description détaillée qui suit en regard du dessin annexé dans lequel :
- la figure 1 est une représentation schématique des principaux éléments d'une structure fixe de section arrière de type en O d'une nacelle de turboréacteur,
- la figure 2 est une représentation schématique de différents efforts auxquels peuvent-être soumis les éléments de la structure fixe de la figure 1,
- les figures 3 et 4 sont des vues schématiques partielles d'une structure fixe comprenant une liaison selon l'invention,
- les figures 5 et 6 sont des représentations schématiques de variantes de réalisation de la bielle rotulée.

Comme décrit précédemment, une structure fixe 1 de section arrière de nacelle de turboréacteur 10 à conduit dit en O comprend un cadre avant 2 sensiblement périphérique destiné à être rattaché à un carter 11 de soufflante d'un turboréacteur et présentant une interruption en partie supérieure destinée au passage d'un pylône 20 de rattachement dudit turboréacteur 10.

La structure fixe 1 comprend également une paire de rails de guidage 3 latéraux, rattachés au cadre avant 2 et s'étendant selon une direction sensiblement longitudinale se la nacelle de part et d'autre de l'interruption du cadre avant 2. Ces rails de guidage 3 sont destinés à coopérer avec des glissières 3' correspondantes du pylône 20 de manière à permettre la translation vers l'arrière de la section arrière, comme évoqué en introduction.

Bien évidemment, il est également possible d'avoir la disposition inverse, à savoir les rails de guidage montés sur le pylône et des glissières rattachées au cadre avant 2.

La structure 1 est destinée à supporter un dispositif d'inversion de poussée à grilles et comprend en outre un cadre arrière 5 destiné à supporter, avec le cadre avant 2, un ensemble de grilles de déviation.

Selon l'art antérieur, les rails de guidage 3 sont rattachés rigidement au cadre avant, et solidaires de ce dernier. Il s'ensuit une structure possédant un fort degré d'hyperstatisme.

Le cadre avant 2 étant rigidement lié au turboréacteur 10, et les rails 3 étant rigidement liés au pylône, cette structure est soumise à des contraintes de déformations importantes résultant des déplacements relatifs entre ces deux structures (turboréacteur et pylône) auxquelles elle est rattachée.

Ces déformations doivent être absorbées par la flexibilité même des matériaux utilisés pour fabriquer lesdits éléments de la structure fixe 1. Cela limite bien évidemment le choix des matériaux utilisables.

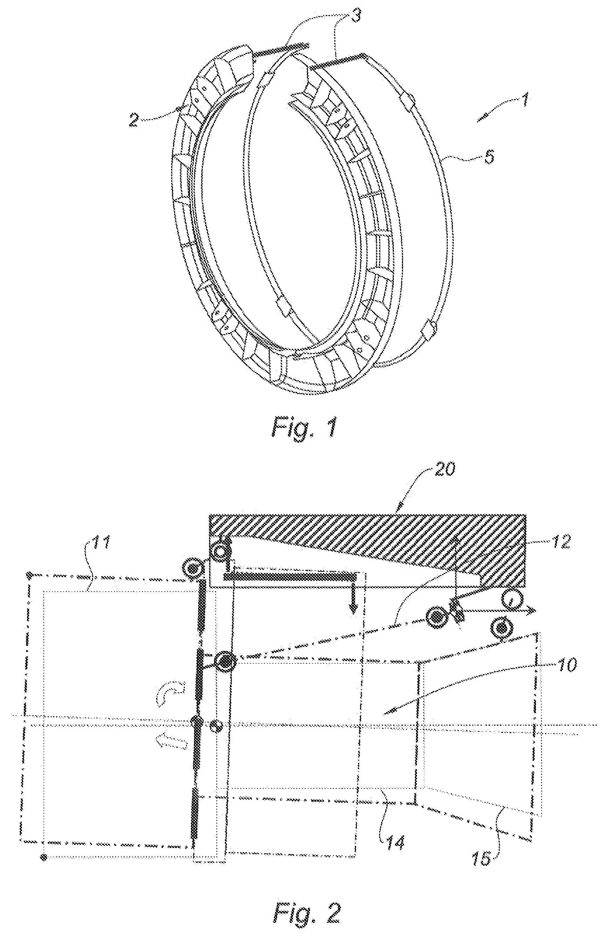

La figure 2 illustre certaines de ces déformations. Il a notamment été évalué que l'expansion thermique des bielles de reprise de poussées 12 entre le pylône 20 et le turboréacteur 10 pouvait atteindre environ 5mm.

Le carter 14 de la chambre de combustion et le carter 15 de tuyère primaire du turboréacteur 10 peuvent subir une expansion axiale pouvant atteindre jusqu'à 10mm.

Le carter 15 de tuyère primaire du turboréacteur 10 peut en outre subir une expansion propre d'environ 5mm.

La structure fixe 1 étant rigidement fixée au pylône 20 et au turboréacteur 10, elle subit une inclinaison correspondante aux déformations subies, et qui se traduit notamment par un relèvement du nez du turboréacteur ainsi qu'une légère avancée de ce dernier.

Par ailleurs, s'agissant déjà d'un environnement fortement sollicitée, de telles déformations rajoutent encore des contraintes locales.

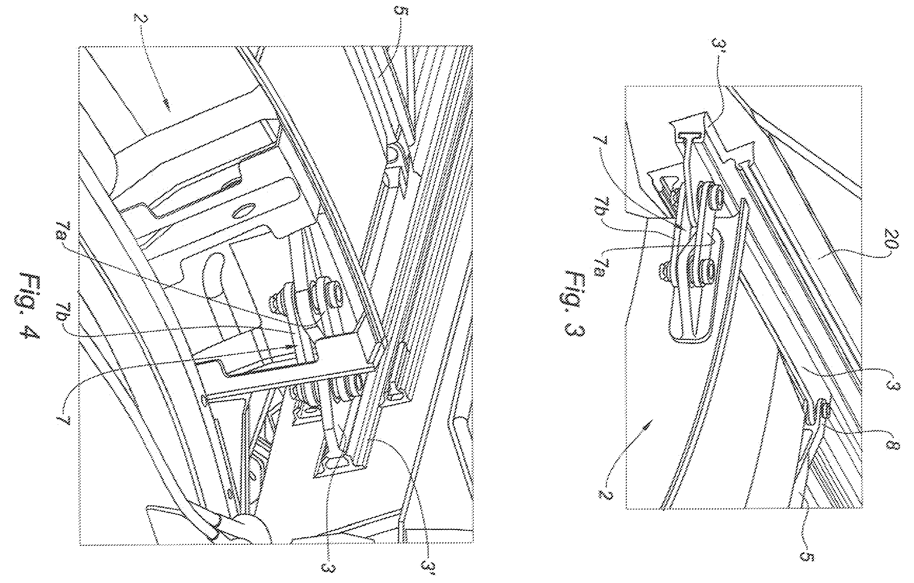

Conformément à l'invention, et comme représenté sur les figures 3 et 4, le cadre avant 2 est relié au rail 3 ou à la glissière de la section aval par l'intermédiaire d'au moins une liaison rotulée 7.

Plus précisément, le cadre avant 2 est rattaché au rail de guidage 3 par l'intermédiaire d'une double bielle rotulée 7a, 7b, orientée selon une direction sensiblement transversale de la nacelle, sensiblement perpendiculairement au pylône 20.

Il est également possible d'orienter la liaison selon une direction longitudinale, en fonction des efforts à reprendre.

On notera également la présence d'une liaison rotulée 8 entre le cadre arrière 5 et le rail de guidage 3. Plus précisément, la liaison rotulée 8 est une liaison simple présentant une fourche rotulée. Cette liaison rotulée du cadre arrière n'est pas présente sur le mode de réalisation de la figure 4.

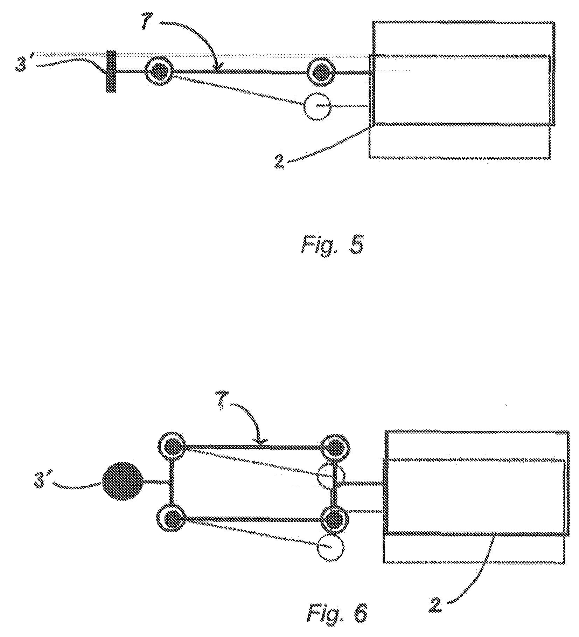

La figure 5 est une représentation schématique du déplacement de la bielle rotulée telle qu'illustrée dans l'exemple précédent. La rotation de la bielle rotulée et de la glissière est réalisée par le profile en T du rail 3'.

La figure 6 représente une variante de mise en oeuvre utilisant un profil de rail rond au lieu d'un profil de rail en T, ceci afin d'éviter des sur-contraintes dues à la reprise de moments dans le profil du rail. La bielle rotulée peut alors être remplacée par deux bielles rotulées formant un parallélogramme déformable, ce qui permet d'imposer à la glissière de rester sensiblement parallèle à l'extrémité 12 heures du cadre avant et ainsi de contrôler son orientation.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle de turboréacteur présentant une section aval (1) comprenant au moins un cadre avant (2) destiné à être rattaché à une partie fixe de la nacelle, ladite section aval étant équipée d'au moins un rail ou glissière (3) s'étendant selon une direction sensiblement longitudinale de la nacelle et apte à coopérer avec au moins une glissière ou rail (3') correspondant d'un pylône de rattachement du turboréacteur, **caractérisée en ce que** le cadre avant est relié au rail ou à la glissière de la section aval par l'intermédiaire d'au moins une bielle rotulée (7).

2. Nacelle selon la revendication 1, **caractérisée en ce que** la section aval (1) comprend un cadre arrière (5).

3. Nacelle selon la revendication 2, **caractérisée en ce que** le cadre arrière (5) est rattaché au rail (3') ou à la glissière (3) par l'intermédiaire d'au moins une liaison rotulée (8).

4. Nacelle selon l'une quelconque des revendications 1 à 3, **caractérisée en ce que** la bielle rotulée (7, 8) est orientée selon un plan sensiblement perpendiculaire au pylône.

5. Nacelle selon la revendication 4, **caractérisée en ce que** la bielle rotulée (7, 8) est principalement orientée sensiblement selon une direction longitudinale de la nacelle.

6. Nacelle selon la revendication 4, **caractérisée en ce que** la bielle rotulée (7, 8) est orientée principalement selon une direction transversale de la nacelle.

7. Nacelle selon l'une quelconque des revendications 1 à 6, **caractérisée en ce que** la liaison rotulée (7) est une liaison double rotule (7a, 7b).

8. Nacelle selon l'une quelconque des revendications 1 à 7, **caractérisée en ce que** la section aval (1) est équipée d'un dispositif d'inversion de poussée.

9. Nacelle selon l'une quelconque des revendications 1 à 8, **caractérisée en ce qu'**il s'agit d'une nacelle de type dit à conduit en O.

## Patentansprüche

1. Turbostrahltriebwerksgondel, die eine nachgelagerte Sektion (1) aufweist, die zumindest einen vorderen Rahmen (2) umfasst, der dazu bestimmt ist, an einen festen Abschnitt der Gondel angeschlossen zu werden, wobei die besagte nachgelagerte Sektion mit zumindest einer Schiene oder Gleitführung (3) ausgerüstet ist, die sich in eine in etwa längslaufende Richtung der Gondel erstreckt und imstande ist, mit zumindest einer entsprechenden Schiene oder Gleitführung (3') eines Mastes zum Befestigen des Turbostrahltriebwerks zusammenzuwirken, **dadurch gekennzeichnet, dass** der vordere Rahmen durch zumindest ein Kugelgelenkglied (7) mit der Schiene oder Gleitführung der nachgelagerten Sektion verbunden ist.

2. Gondel nach Anspruch 1, **dadurch gekennzeichnet, dass** die nachgelagerte Sektion (1) einen hinteren Rahmen (5) umfasst.

3. Gondel nach Anspruch 2, **dadurch gekennzeichnet, dass** der hintere Rahmen (5) durch zumindest ein Kugelgelenkglied (8) mit der Schiene (3') oder der Gleitführung (3) verbunden ist.

4. Gondel nach irgendeinem der Ansprüche 1 bis 3, **dadurch gekennzeichnet, dass** das Kugelgelenkglied (7, 8) entsprechend einer Ebene ausgerichtet ist, die in etwa senkrecht zum Masten verläuft.

5. Gondel nach Anspruch 4, **dadurch gekennzeichnet, dass** das Kugelgelenkglied (7, 8) hauptsächlich in etwa in eine längslaufende Richtung der Gondel ausgerichtet ist.

6. Gondel nach Anspruch 4, **dadurch gekennzeichnet, dass** das Kugelgelenkglied (7, 8) hauptsächlich in eine querlaufende Richtung der Gondel ausgerichtet ist.

7. Gondel nach irgendeinem der Ansprüche 1 bis 6, **dadurch gekennzeichnet, dass** die Kugelgelenkverbindung (7) eine Doppelkugelgelenkverbindung (7a, 7b) ist.

8. Gondel nach irgendeinem der Ansprüche 1 bis 7, **dadurch gekennzeichnet, dass** die nachgelagerte Sektion (1) mit einer Schubumkehrvorrichtung ausgerüstet ist.

9. Gondel nach irgendeinem der Ansprüche 1 bis 8, **dadurch gekennzeichnet, dass** es sich um eine O-Duct genannte Gondel handelt.

## Claims

1. A nacelle for a turbojet engine having a downstream section (1) comprising at least one front frame (2) intended to be attached to a fixed portion of the nacelle, said downstream section being equipped with at least one rail or slide (3) extending along a substantially longitudinal direction of the nacelle and able to cooperate with at least one slide or rail (3') corresponding to an attachment pylon of the turbojet engine, **characterized in that** the front frame is connected to the rail or to the side of the downstream section by means of at least one ball-joint connecting rod (7).

2. The nacelle according to claim 1, **characterized in that** the downstream section (1) comprises a rear frame (5).

3. The nacelle according to claim 2, **characterized in that** the rear frame (5) is attached to the rail (3') or to the slide (3) by means of at least one ball-joint connection (8).

4. The nacelle according to any one of claims 1 to 3, **characterized in that** the ball-joint connecting rod (7, 8) is oriented along a plane substantially perpendicular to the pylon.

5. The nacelle according to claim 4, **characterized in that** the ball-joint connecting rod (7, 8) is mainly oriented substantially along a longitudinal direction of the nacelle.

6. The nacelle according to claim 4, **characterized in that** the ball-joint connecting rod (7, 8) is oriented mainly along a transverse direction of the nacelle.

7. The nacelle according to any one of claims 1 to 6, **characterized in that** the ball-joint connection (7) is a double ball-joint connection (7a, 7b).

8. The nacelle according to any one of claims 1 to 7, **characterized in that** the downstream section (1) is equipped with a thrust reverser device.

9. The nacelle according to any one of claims 1 to 8, **characterized in that** it is about a nacelle of the type called O-duct type.
